# EUROPEAN PATENT SPECIFICATION

(11) **EP 4 613 607 B1**
(45) Date of publication and mention of the grant of the patent: **02.09.2026**
(21) Application number: 24305342.8
(22) Date of filing: 06.03.2024
(51) Int. Cl.: B61L 27/12

(54) **METHOD AND SYSTEM FOR MANAGING TRAFFIC OF GUIDED VEHICLES OVER A RAILWAY NETWORK**
VERFAHREN UND SYSTEM ZUR VERKEHRSVERWALTUNG VON GEFÜHRTEN FAHRZEUGEN ÜBER EIN EISENBAHNNETZ
PROCÉDÉ ET SYSTÈME DE GESTION DU TRAFIC DE VÉHICULES GUIDÉS SUR UN RÉSEAU FERROVIAIRE

(43) Date of publication of application: 10.09.2025
(73) Proprietor: Siemens Mobility SAS, 92320 Châtillon (FR)
(72) Inventor: Casadei, Thomas, 92600 Asnières-sur-Seine (FR)
(74) Representative: Siemens Patent Attorneys

(56) References cited:
- EP-A1- 3 141 451
- EP-A1- 3 751 479
- EP-A1- 3 831 691
- US-A1- 2020 156 679
- US-B2- 11 702 120
- THORSTEN BÜKER ET AL: "Stochastic modelling of delay propagation in large networks", JOURNAL OF RAIL TRANSPORT PLANNING & MANAGEMENT, vol. 2, 1 January 2012 (2012-01-01), pages 34 - 50, XP055718857
- THORSTEN BUKER: "Ausgewählte Aspekte der Verspätungsfortpflanzung in Netzen", DISSERTATION, 1 January 2010 (2010-01-01), pages 15 - 221, XP055718860

## Description

### Technical Field

The present invention concerns the management of traffic of guided vehicles over a railway network. By "guided vehicle", it has to be understood any rail transport means configured for moving on tracks of a railway network, said guided vehicle typically running on at least one rail configured for supporting one or several wheels of said guided vehicle or using at least one rail as guiding means for guiding the guided vehicle along a trajectory defined by said rail. Said rail transport means are for instance public transport means like subways, trains or train units, etc., as well as load transporting means such as, for example, freight trains, for which safety is a very important factor.

### Background Art

The traffic of guided vehicles over a railway network is usually managed by traffic control systems. The latter are in charge of the routing of guided vehicles on the railway network. They usually control said traffic based on a timetable that defines a routing plan for the guided vehicles. Said timetable enables to determine a scheduling (i.e. an order) of the guided vehicles at any point or at predefined points of the railway network (e.g. at crossing, at a switch, etc.). As long as the guided vehicles are moving according to the planned timetable, things are fine. However, as soon as an issue occurs, e.g. a guided vehicle is delayed, then the timetable might have to be changed and new routing calculated. A change in a timetable is always of major concern, as any error or mistake might have serious consequences on the traffic of guided vehicles. Until now, no traffic control system is able to efficiently and automatically apply changes to a timetable. Usually, they are only able to recalculate a new timetable by applying delays to one or several guided vehicles, so that consistency remains ensured within the new timetable.

For instance, the patent application EP3751479A1 proposes an information processing apparatus that comprises a diagram processor and an output diagram creator, wherein the diagram processor is configured to calculate adjustment amounts of times of events in a first diagram representing departure/arrival/passing times at different positions on the railway network, and the output diagram creator is configured for creating from the first diagram a second diagram based on said adjustment amount. The paper of Thorsten Büker and Bernhard Seybold, entitled "Stochastic modelling of delay propagation in large networks" (Journal of Rail Transport Planning & Management 2 (2012) 34-50) proposes to use analytical procedures to compute the propagation of delays on railway networks, and the dissertation of Thorsten Büker entitled "Ausgewähite Aspekte der Verspätungsfortpflanzung in Netzen" (Jan. 1st, 2010, pages 15-221, XP055718860) proposes a way to determine how delay propagate through the railway network.

There is therefore a need for a system and method which could efficiently manage any change in a timetable in a way that ensures an efficient movement of the guided vehicles routed according to said timetable.

### Summary of Invention

An objective of the present invention is to propose a method and a system for managing traffic of guided vehicles over railway network that are able to efficiently manage any change to a timetable defining a routing plan for said guided vehicles.

This objective is achieved by the measures taken in accordance with the independent claims. Further advantageous embodiments are proposed by the dependent claims.

More precisely, the present invention concerns a method for managing traffic of guided vehicles over a railway network, said method comprising:
- acquiring or receiving a timetable for said guided vehicles, said timetable comprising departure and/or arrival times of the guided vehicles at reference positions of said railway network, and/or optionally one or several crossing times, wherein each crossing time defines a time at which a guided vehicle is crossing one of said reference positions (in other words, the arrival time and the departure time are identical and equal to said crossing time at said reference position), wherein said reference positions comprise for instance a position of a station and/or a position of a depot and/or any other relevant position on the railway network;
- acquiring or receiving a map of said railway network;
- using said map of the railway network for automatically dividing/splitting the railway network into a set of successive track sections, wherein each track section is delimited by at least two boundary positions, wherein at least one of said two boundary positions is a common boundary position with another track section of said set;
- for each boundary position, automatically determining a list of the guided vehicles crossing said boundary position, wherein said list is configured for ordering said guided vehicles crossing said boundary position according to their temporal succession at said boundary position (e.g. the first guided vehicle in the list is the guided vehicle crossing first the boundary position, the second guided vehicle being the second one crossing said boundary position, etc. until the last guided vehicle of the list, or inversely, the first guided vehicle of said list being the last guided vehicle crossing the boundary position and the last guided vehicle being the first one crossing said boundary position). Important is that the list defines the successive temporal order of the listed guided vehicles at the boundary position;
- automatically creating, from the map, the boundary positions and their associated list, a directed graph comprising nodes and directed edges, wherein each node represents an itinerary followed by one of said guided vehicles, said itinerary being defined as a series of successive and consecutive boundary positions that are crossed by said guided vehicle, and wherein each directed edge is configured for connecting two of said nodes with one another according to a direction leading from one of said two nodes, called "starting node", to the other one of said two nodes, called "ending node", wherein said directed edge is configured for representing an order relationship (predecessor/successor) between the guided vehicle of the starting node and the guided vehicle of the ending node, wherein if the guided vehicle of the starting node is different from the guided vehicle of the ending node, then the guided vehicle of the starting node precedes the guided vehicle of the ending node at each boundary position that they have in common in their respective itinerary as defined by their respective node, and wherein if the guided vehicle of the starting node is the same as the guided vehicle of the ending node, then the itinerary defined by the starting node precedes the itinerary defined by the ending node;
- using the directed graph as input to an algorithm configured for automatically detecting whether said directed graph comprises one or several cycles (wherein a cycle is a closed path, i.e. a sequence of directed edges and nodes that starts from one of said nodes, called initial node, and ends at said initial node, wherein all directed edges are distinct and the only node occurring twice is said initial node, which occurs exactly twice); and
- if no cycle is detected by the algorithm, then managing the traffic of said guided vehicles according to said timetable.

The present invention concerns also a traffic control system for managing traffic of guided vehicles over a railway network, said traffic control system comprising a processor and a memory, said traffic control system being configured for managing traffic of said guided vehicles over the railway network according to a timetable as previously described, said timetable being received or acquired by said traffic control system and preferentially stored in said memory, said traffic control system being configured for
- acquiring a map of said railway network, and for using said map of the railway network for automatically dividing/splitting the railway network into a set of successive track sections, wherein each track section is delimited by at least two boundary positions, wherein at least one of said two boundary positions is a common boundary position with another track section of said set;
- automatically determining, for each boundary position, a list of the guided vehicles crossing said boundary position, and, in each list, for ordering the guided vehicles according to their temporal succession at said boundary position;
- automatically creating, from the map, the boundary positions and their associated list, a directed graph comprising nodes and directed edges, wherein each node represents an itinerary followed by one of said guided vehicles, said itinerary being defined as a series of successive and consecutive boundary positions that are crossed by said guided vehicle, and wherein each directed edge is configured for connecting two of said nodes with one another according to a direction leading from one of said two nodes, called "starting node", to the other one of said two nodes, called "ending node", wherein said directed edge is configured for representing an order relationship (predecessor/successor) between the guided vehicle of the starting node and the guided vehicle of the ending node, wherein if the guided vehicle of the starting node is different from the guided vehicle of the ending node, then the guided vehicle of the starting node precedes the guided vehicle of the ending node at each boundary position that they have in common in their respective itinerary as defined by their respective node, and wherein if the guided vehicle of the starting node is the same as the guided vehicle of the ending node, then the itinerary defined by the starting node precedes the itinerary defined by the ending node;
- using the directed graph as input to an algorithm configured for automatically detecting whether said directed graph comprises one or several cycles (wherein a cycle is a closed path, i.e. a sequence of directed edges and nodes that starts from one of said nodes, called initial node, and ends at said initial node, wherein all directed edges are distinct and the only node occurring twice is said initial node, which occurs exactly twice); and
- if no cycle is detected by the algorithm, then managing the traffic of said guided vehicles according to said timetable.

The method and the system previously described enable the traffic control system to automatically and autonomously detect if a change in a timetable leads to inconsistencies in the routing and scheduling (or ordering) of the guided vehicles. Additionally, as explained afterwards, if an inconsistency is detected, it further enables to automatically correct said inconsistency, ensuring thus a continuous adaptation of the traffic of guided vehicles to timetable changes by taking appropriate actions.

### Description of Embodiments

According to the present invention, if at least one cycle is detected by the algorithm, then, for each detected cycle, the traffic control system is configured for automatically determining by means of said algorithm whether the direction of one or several directed edges involved in said cycle might be reversed for breaking the concerned cycle, and if yes, then reversing the direction of at least one among said one or several directed edges involved in said cycle; and
- if each detected cycle has been broken by reversing at least one of its directed edges, then automatically generating by said algorithm a new timetable taking into account the reversed directed edge(s), and managing the traffic of said guided vehicles according to said new timetable; otherwise,
- if at least one detected cycle has not been broken, then automatically generating an alert.

In other words, the traffic control system according to the invention is able to automatically correct inconsistencies appearing in a timetable and resulting from a change in said timetable. In particular, if several cycles are detected, then the traffic control system is configured for ordering said cycles according to an increasing number of guided vehicles involved in each cycle, and implementing an iteration for breaking cycles, wherein said iteration starts from the cycle which comprises the smallest number of guided vehicles and ends with the cycle comprising the largest number of guided vehicles, unless a cycle cannot be broken, in which case the iteration stops at said cycle which cannot be broken.

Preferentially, for determining whether the direction of one or several directed edges involved in a detected cycle might be reversed, said algorithm is configured for classifying the directed edges of said detected cycle in two groups, namely a first group comprising directed edges that can be reversed and a second group comprising directed edges that cannot be reversed, wherein a directed edge of said detected cycle is classified by said algorithm into said second group if it is at least one of:
- a directed edge whose direction has been previously reversed in response to a request for changing the temporal order of crossing/passing vehicles in one of said lists associated to one of said boundary positions;
- a directed edge which is not connected to a node to which a previously reversed directed edge is connected;
- a directed edge whose reversing would reverse a previous order of successive itineraries for a guided vehicle;
- a directed edge which is assigned a fixed direction;
and otherwise it is classified into said first group, the algorithm being further configured for automatically reversing one or several of the directed edges of the first group for breaking said detected cycle. If said first group comprises a single directed edge, then the algorithm automatically reverses said directed edge. In such a case, there is a single solution for breaking the cycle. If the first group comprises several directed edges, then the algorithm is configured for automatically applying a reversing rule configured for optimizing the traffic, i.e. the flow of guided vehicles. Said reversing rule is for instance one of, or a combination of the following rules or actions that are implemented by the traffic control system via its algorithm when breaking cycles:
- minimizing the number of reversed directed edges for breaking the cycle, notably when breaking all cycles;
- reversing a set of directed edges that minimizes time differences between the new timetable and the received or acquired timetable;
- reversing one or several directed edges that minimize a delay time of guided vehicles comprising a high passenger occupancy;
- reversing one or several directed edges that minimize a delay time of a priority guided vehicle.

Of course, other rules or actions might be defined for optimizing the traffic when an inconsistency is detected in a timetable. The traffic control system is typically configured for automatically determining which directed edge(s) within said first group has or have to be reversed for satisfying the rule, e.g. for minimizing said number of reversed directed edges.

Preferentially, the traffic control system is further configured for automatically creating a sequencing graph from the map, the timetable, the boundary positions and their associated list. Said sequencing graph comprises nodes and edges, wherein each node represents one of said boundary positions and is assigned said list of guided vehicles passing/crossing said boundary position, wherein each edge is configured for connecting two boundary positions and represents one of said track sections delimited by (or connecting) said two boundary positions according to said map, each edge being assigned said moving direction configured for indicating the direction of travel followed by the guided vehicle(s) of said list according to the timetable when moving on said track section from one of said boundary positions to the other one. In particular, the directed graph might be automatically generated from said sequencing graph by the traffic control system. Said sequencing graph might be further displayed, e.g. on a screen, providing a simple representation of the ordering of guided vehicles at each boundary position, and enabling for instance an interaction of an operator with said sequencing graph for reordering guided vehicles at one of said boundary positions.

In particular, the timetable received or acquired by the traffic control system may comprise a change requested by an operator. Said change is for instance a modification of an arrival time and/or a modification of a departure time and/or a modification of a crossing time at one or several reference points, and/or a modification of a temporal order of guided vehicles in a list associated to a boundary position. Typically, said change might be applied by an operator to an already existing timetable whose corresponding directed graph was free of any cycle, and which, after incorporation of said change, results in a modified timetable that has to be checked, by the traffic control system according to the invention, for coherence with respect to the departure, arrival, and optionally crossing times defined by it for the guided vehicles.

Preferentially, the traffic control system according to the invention uses a splitting algorithm for automatically splitting the railway network into said set of successive track sections, wherein the splitting algorithm is configured for applying splitting rules for automatically positioning said boundary positions on the railway network. In particular, the splitting algorithm may use the following splitting rules:
- creating a boundary position between two directly successive switches, each of said switches being converging in direction of said boundary position;
- creating a boundary position at the crossing of two tracks, wherein two tracks arrive at said boundary position and two tracks depart from said boundary position;
- creating a boundary position between a switch and a stop signal and/or creating a boundary position at said stop signal;
- creating a boundary position downstream a converging switch (i.e. after the switch, on the converging path towards which any of the diverging paths converge, wherein the switch is considered as dividing one track (the converging path) into two (the diverging paths));
- optionally, creating a boundary position per platform.

### Brief Description of the Drawing

Further aspects of the present invention will be better understood through the following drawings, wherein like numbers designate like objects:
- Fig. 1: schematic illustration of a railway network according to the invention.
- Fig. 2: flowchart of a preferred embodiment of a method according to the invention.
- Fig. 3: schematic illustration of a sequencing graph according to the invention.
- Fig. 4: schematic illustration of a directed graph according to the invention.
- Fig. 5A: schematic illustration of another sequencing graph comprising a guiding vehicle ordering inconsistency.
- Fig. 5B: schematic illustration of a directed graph corresponding to the sequencing graph of Fig. 5A and that comprises a cycle.
- Fig. 6A: schematic illustration of a reordering of guided vehicles in a sequencing graph according to the invention.
- Fig. 6B: schematic illustration of a directed graph corresponding to Fig. 6A.
- Fig. 7A: schematic illustration of a sequencing graph resulting from the reordering illustrated in Fig. 6A.
- Fig. 7B: schematic illustration of a directed graph corresponding to the sequencing graph of Fig. 7A.
- Fig. 8: schematic illustration of a correction of the new sequencing graph.
- Fig. 9: schematic illustration of a directed graph representing the corrected new sequencing graph.
- Fig. 10: schematic illustration of a traffic control system according to the invention.

### Description of Examples

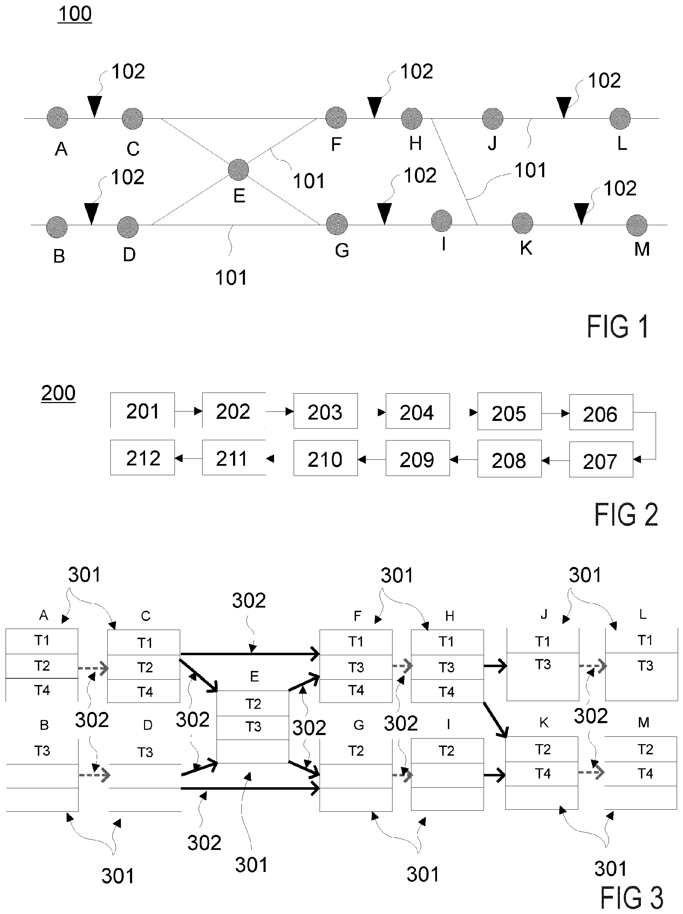

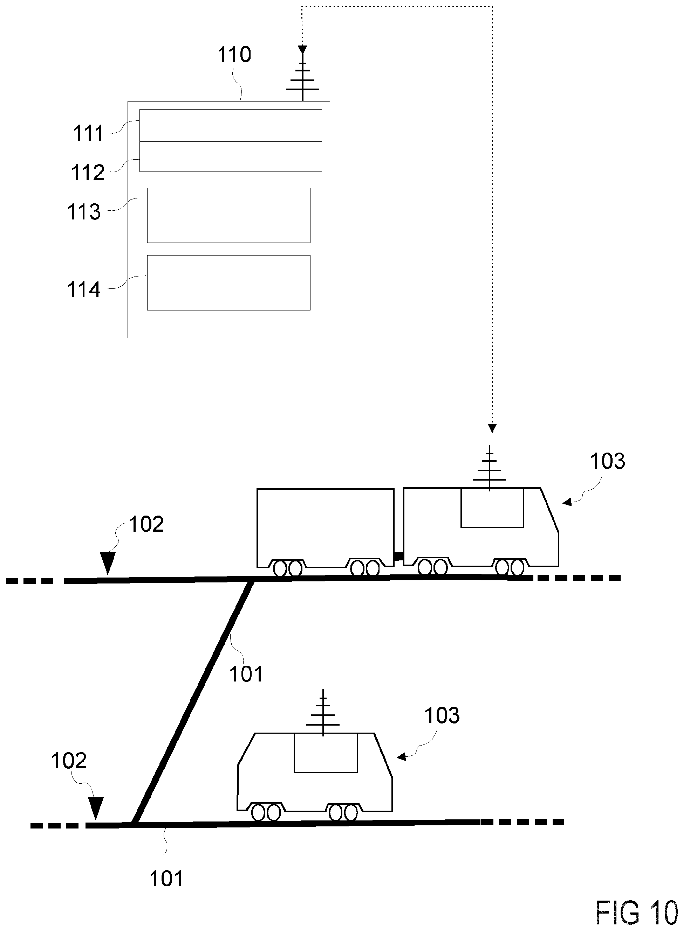

In Figure 1, a schematic illustration of a railway network 100 is presented. The latter comprises tracks 101 interconnected with each other to form a network. Said railway network 100 further comprises various railway signalling systems installed along the tracks 101, and notably stop signals 102, wherein guided vehicles, e.g. trains 103 (see Fig. 10), may have to stop. Different reference positions might be defined in said railway network, like the position of a station, or the position of a depot, the position of a level crossing, the position of a stop signal, or any other visible point of interest to which a schedule could be applied. The traffic control system 110 according to the invention is better illustrated in Fig. 10. It comprises at least a processor 111 and a memory 112. The traffic control system 110 is configured for managing traffic on the railway network 100 according to a received or acquired timetable. For this purpose, it may comprise a communication module 113 for communicating with the guided vehicles 103 and/or with railway signalling systems, like the signals 102, notably for sending a control order configured for controlling for instance said railway signalling system. Usually, radio communication 115 is preferred. In case of a change in a received timetable resulting in a changed timetable, the traffic control system 110 according to the invention is able to automatically check whether the schedules of each guided vehicle and as defined by the changed timetable are consistent with each other before using said changed timetable for managing the traffic of said guided vehicles on the railway network according to the changed timetable, and if an inconsistency is found, then it is able to automatically correct the changed timetable for removing said inconsistency, or to automatically alert an operator if said inconsistency cannot be removed.

This will be better understood with the help of Figure 2 which shows a preferred embodiment of a method 200 according to the invention.

At step 201, the traffic control system 110 receives or acquires a timetable for said guided vehicles. Said timetable might be a completely new timetable, or a previous timetable comprising a change. Typically, for each guided vehicle crossing or reaching one of said reference position, the timetable associates to said reference position either the crossing time at which the guided vehicle (e.g. the front of the guided vehicle) crosses the reference position, or an arrival time and a departure time indicating the time at which the guided vehicle (e.g. its front) reaches the reference position, and the time at which it leaves (e.g. its front) said reference position.

At step 202, which can take place before, after, or simultaneously to step 201, the traffic control system 110 acquires or receives a map of said railway network. Said map enables the traffic control system 110 to determine the position of the different tracks, reference positions, etc., and thus to determine the different routes that the guided vehicles can follow.

At step 203, the traffic control system 110 automatically divides or split the railway network into a set of successive track sections. Such a splitting/division is shown in Fig. 1, wherein the dots A-M represent each a boundary position between two of said track sections. For instance, the segment of track [A,C] is a first track section, and the segment of track [C,E] is a second track section, the boundary position C being the common boundary position to the first and second track sections. For this purpose, and as explained earlier, the traffic control system 110 may use a splitting algorithm that will automatically split the railway network into successive track sections delimited by boundary positions, by automatically determining, from splitting rules, where, on said railway network, a boundary position shall be located. Steps 202 and 203 are preferentially performed before step 201, the traffic control system 110 storing for instance in a database the location of each boundary position on the railway network.

At step 204, the traffic control system 110 automatically determines, for each boundary position A-M, and notably from said timetable and the position of each boundary position on the railway network, a list of the guided vehicles that cross said boundary position. Such lists are shown in the sequencing graph of Fig. 3. For instance, for the boundary position A, the guided vehicle T1 crosses the boundary position A before the guided vehicle T2, which crosses said boundary position A before the guided vehicle T4. The list temporally orders the guided vehicles crossing the considered boundary position, from the first to the last guided vehicle crossing said boundary position.

At step 205, and optionally, the traffic control system 110 creates a sequencing graph as illustrated in Fig. 3. The sequencing graph comprises nodes 301 and edges 302. Each node 301 represents one of said boundary positions A-M. For simplicity, the node corresponding to a boundary position "i" will be called hereafter the "node i". To each node 301 is further assigned or associated the list of guided vehicles passing/crossing said boundary position. Each edge 302 connects two nodes, and thus two boundary positions. One node 301 might be connected to several other nodes via said edges 302. For instance, the node C is connected to the node E and to the node F. Each edge 302 is represented by an arrow whose direction represents the moving direction for a guided vehicle of the list from a starting node to an arrival node. It defines thus a moving direction for the considered guided vehicle. For instance, when considering the node C, the guided vehicle T1 will move from said node C towards the node **F,** while the guided vehicle T2 will move from the node C to the node E. Preferentially, said sequencing graph comprises two types of edges 302, namely "pass-through edges with possible stop" (shown with dotted arrow) and "pass-through edge without possible stop" (shown with continuous line arrow), wherein pass-through edges with possible stop indicate a presence of a planned stopping position (i.e. the presence of a stop signal 102) for a guided vehicle between the boundary positions connected by said edge, and wherein a pass-through edge without possible stop indicates an absence of such planned stopping position between the boundary positions connected by said edge. At said planned stopping position, a guided vehicle can be at stand still for letting another guided vehicle reaching a next boundary position before it. This enables the traffic control system 110 to automatically determines which track sections can be used for letting a second guided vehicle pass before a first guided vehicle by maintaining the latter at stand still at a stop signal 102. Preferentially, said sequencing graph is displayed on a display 114 of the traffic control system 110. The sequencing graph provides, to an operator, an intelligible view of the sequencing of the guided vehicles at each boundary position. It also enables the operator to easily change the order of guided vehicles at a specific boundary position by interacting with said sequencing graph.

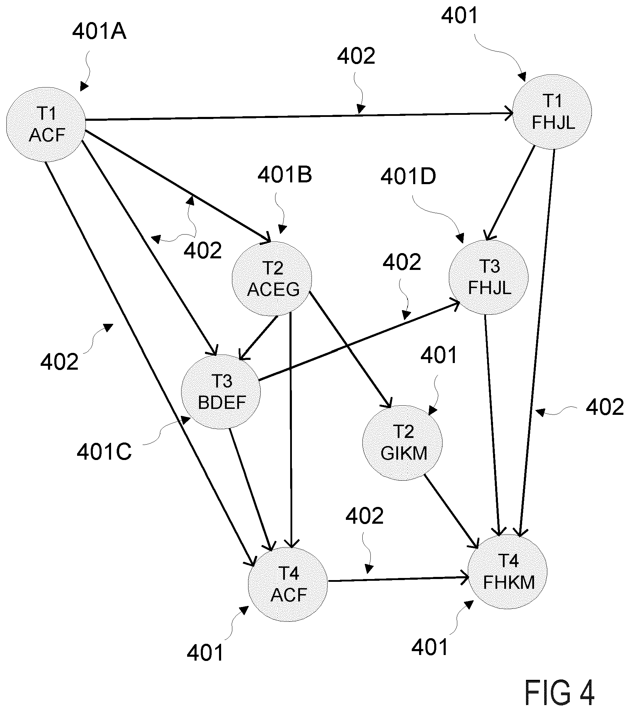

At step 206, either from the sequencing graph, or directly from the map, the boundary positions, and their associated list, the traffic control system 110 automatically generates a directed graph. Such directed graph is illustrated in Fig. 4 for the timetable defined by the sequencing graph of Fig. 3. The directed graph comprises nodes 401, 401A-D and directed edges 402 represented by arrows. Each node 401 represents an itinerary followed by one of said guided vehicles 103. For instance, the node 401A defines for the guided vehicle T1 an itinerary passing successively through the boundary positions A, C, and F. The itinerary defines thus a series of temporally successive and consecutive boundary positions crossed by the guided vehicle. It typically starts with a first boundary position located upstream (with respect to the direction of travel of the guided vehicle) a reference position (called hereafter the "stopping reference position") wherein the guided vehicle is authorized to stop or might stop for letting for instance another guided vehicle to overtake said guided vehicle, said stopping reference position being preferentially the first reference position that the guided vehicle will cross when moving from said first boundary position in direction of the stopping reference position, the stopping reference position being typically a stop signal, said itinerary ending upstream another stopping reference position wherein the guided vehicle is authorized to stop or may stop. For instance, an itinerary might thus correspond to the series of successive and consecutive boundary positions crossed by the guided vehicle between a first stop signal and a second stop signal when moving from said first stop signal towards said second stop signal, said series further comprising as first boundary position of the series, the boundary position located upstream the first stop signal and that is the last boundary position crossed by the guided vehicle when moving towards said first stop signal. As shown in Fig. 4, each directed edge 402 connects two nodes 401, and each node 401 might be connected, via one or respectively several of said directed edges to one or respectively several other nodes 401. To each edge 402 is associated a direction that is represented by the orientation or direction of the arrow. Each edge 402 connects thus a starting node (at the basis of the arrow) to an ending node (at the tip of the arrow). The direction defined by the directed edge, i.e. by the arrow, represents an order relationship (predecessor/successor) between the guided vehicle of the starting node and the guided vehicle of the ending node. For instance, if one considers the nodes 401A and 401B of Fig. 4, the guided vehicle T1 precedes the guided vehicle T2 in the boundary positions they have in common in their respective itinerary, that is, guided vehicle T1 precedes the guided vehicle T2 in the boundary position A and C. If nodes connected by a directed edge 402 are assigned to a same guided vehicle, like the nodes 401C and 401D which are both assigned to the guided vehicle T3, then the itinerary defined by the starting node, i.e. the itinerary passing successively through the boundary positions B, D, E, and F according to node 401C precedes the itinerary defined by the ending node, i.e. after having crossed the boundary position **F,** the guided vehicle T3 will then successively cross the boundary positions **F,** H, J, and L associated to node 401D.

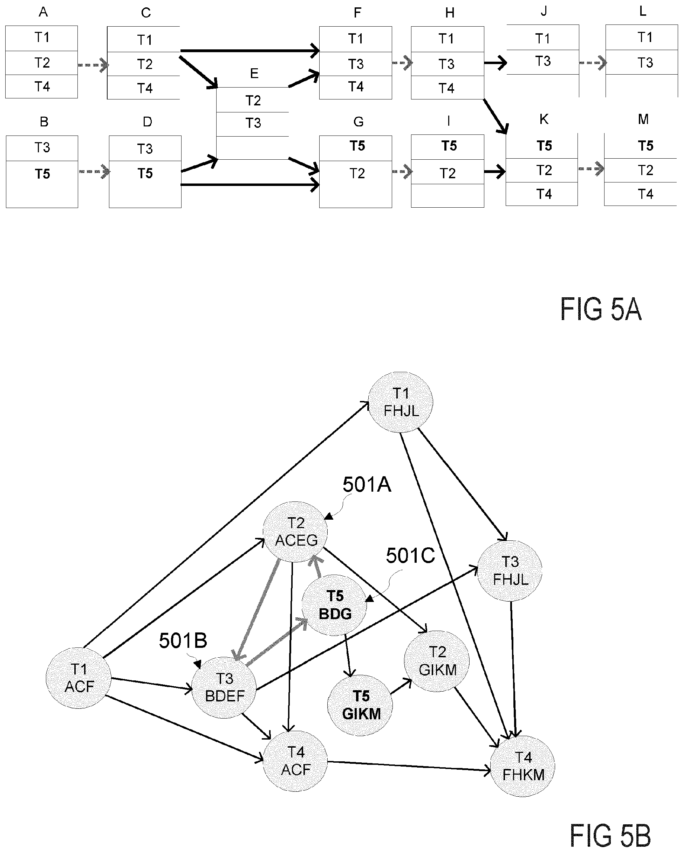

At step 207, the traffic control system 110 uses the directed graph as input to an algorithm configured for automatically detecting whether said directed graph comprises one or several cycles. Such a cycle is illustrated in Fig. 5B and comprises nodes 501A, 501B, and 501C. It forms a cycle because the node 501A is connected by a first directed edge to the node 501B, which is connected by a second directed edge to the node 501C, which is itself connected by a third directed edge back to the node 501A, closing the cycle or loop. When following the direction defined by the arrows representing the directed edges, and thus the precedence relationship between the guided vehicles at different boundary positions as defined by their respective itinerary, one can observe that when starting at a starting node (e.g. node 501A), the precedence relationship defined by the arrows leads at the end to said starting node, defining therefore a cycle that starts and ends at the same node. Said algorithm for detecting a cycle in a directed graph might be based on graph theory, notably as disclosed in D. B. Johnson (SIAM J. Comput., Vol. 4, N°1, March 1975, "Finding all the elementary circuits of a directed graph") or R. Tarjan (SIAM J. Comput., Vol. 1, N° 2, June 1972, "Depth-first search and linear graph algorithm") studies.

At step 208, if no cycle is detected by said algorithm, then the traffic control system 110 uses the received or acquired timetable of step 201 for managing the traffic of said guided vehicles on the railway network. Indeed, if no cycle is detected, the traffic control system 110 considers then the timetable as consistent, having checked that there is no conflict between the schedules of the different guided vehicles. It can then safely apply said timetable for managing said traffic of guided vehicles.

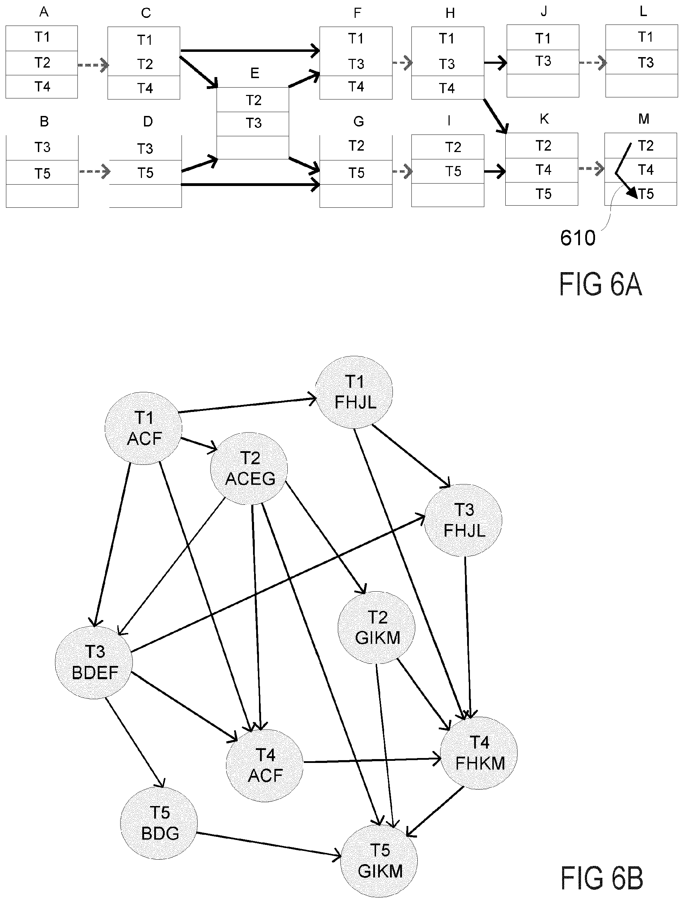

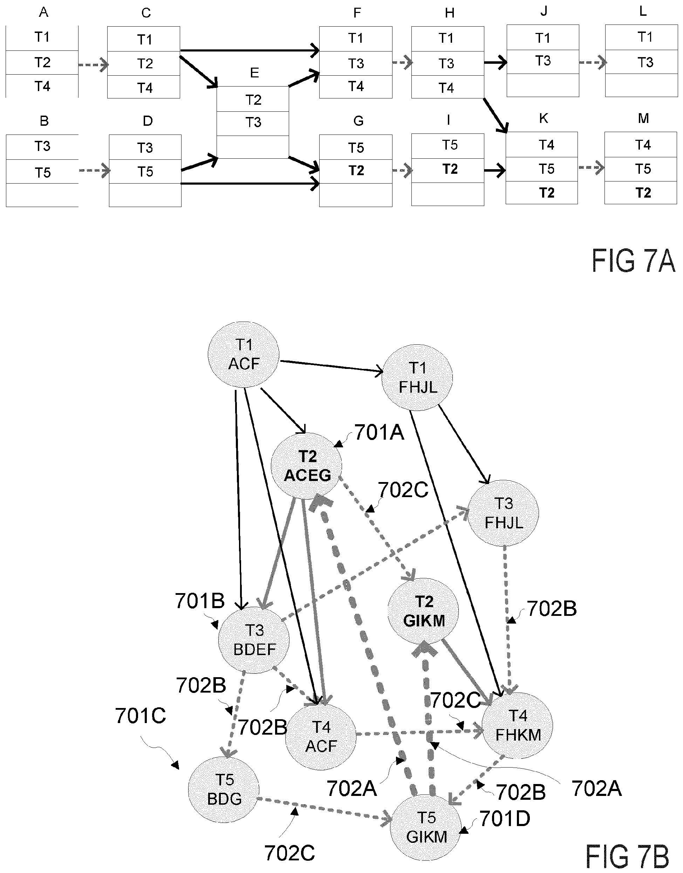

However, if at least one cycle is detected at step 209, then, for each detected cycle, the traffic control system 110 automatically determines, by means of said algorithm, whether the direction of one or several directed edges involved in the detected cycle might be reversed for breaking the concerned cycle. For instance, the timetable corresponding to the sequencing graph described in Fig. 3 might be amended for incorporating an additional a route or itinerary defined for a guided vehicle T5 and leading to a new timetable that corresponds to the sequencing graph shown in Fig. 5A. For this new timetable, the traffic control system 110 detects, by implementing the steps described above, a cycle comprising nodes 501A, 501B, and 501C as illustrated in the corresponding directed graph of Fig. 5B. This means that some schedules of the guided vehicles are not coherent with each other. According to another example, an operator may reorder the guided vehicles at a boundary position. This is illustrated by Figures 6A, 6B, 7A, and 7B. Figures 6A and 6B are respectively the sequencing graph and the directed graph of a timetable for which no cycles have been detected (see Fig. 6B). The operator may then request that the guided vehicle T2 be after the guided vehicle T5 at boundary position M as illustrated by the arrow 610 in Fig. 6A. Said reordering results in a new sequencing graph presented in Fig. 7A and a corresponding new directed graph presented in Fig. 7B. As can be seen from Fig. 7B in comparison with Fig. 6B, this reordering also created a cycle comprising the nodes 701A, 701B, 701C, and 701D. For each amendment or modification of the timetable, coming from an operator, or from any other event, like a delay occurring on the railway network, the traffic control system 110 will automatically check whether the directed graph corresponding to the (modified) timetable received as input comprises or not one or several cycles. For each detected cycle, the traffic control system 110 determines which directed edges cannot be reversed, creating therefore a first group of directed edges which will comprise directed edges that can be reversed, and a second group of directed edges comprising directed edges that cannot be reversed. Predefined rules are used by the traffic control system 110 for determining whether a directed edge can be reversed or not. This is schematically illustrated in Fig. 7B:
- directed edges 702A represent directed edges that have been reversed in response to the reordering requested by the operator, and such directed edges cannot be reversed again, and belong to the second group;
- directed edges 702B represent directed edges that are not connected to a node for a guided vehicle for which a reordering took place, i.e. to which a previously reversed directed edge is connected. Such directed edges 702B cannot be reversed and belong to the second group;
- directed edges 702C represent directed edges whose reversing would reverse a previous order of successive itineraries for a guided vehicle. Such directed edges cannot be reversed and belong to the second group;
- a directed edge which is assigned a fixed direction cannot be reversed and belongs to the second group.

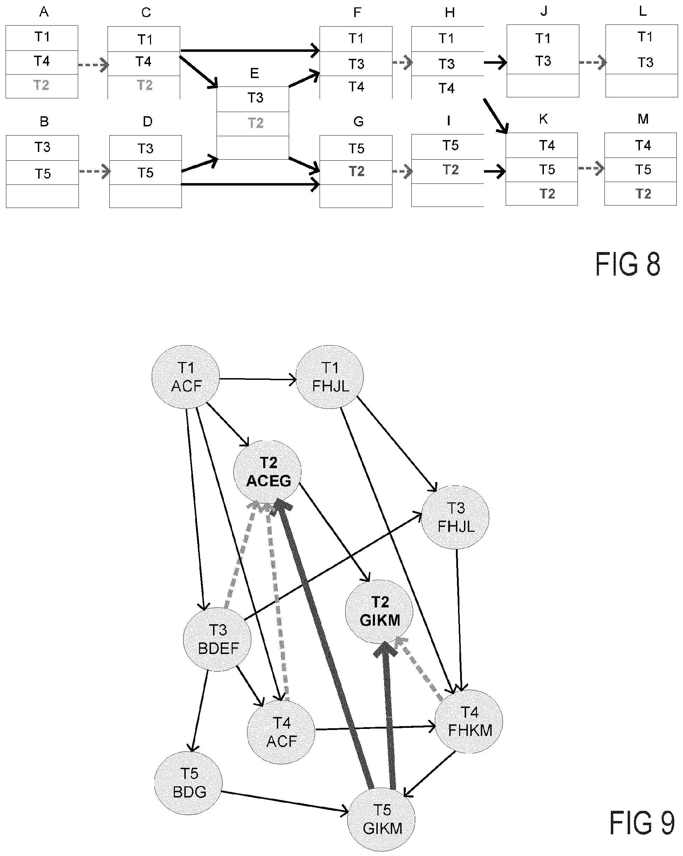

Then, at step 210, the algorithm reverses, for instance iteratively reverses, the directed edges of the first group. For this purpose, the algorithm preferentially applies reversing rules configured for optimizing the new timetable with respect to the received timetable. The algorithm automatically stops as soon as all cycles have been broken. Figures 8 and 9 present the result obtained after reversing some of the directed edges of the directed graph of Fig. 7A. The reversed directed edges are represented in the directed graph of Fig. 9 by dotted lines, and the corresponding sequencing graph is illustrated in Fig. 8.

At step 211, if each detected cycle has been broken by reversing at least one of its directed edges, then the traffic control system 110 automatically generates by means of said algorithm a new timetable, wherein said new timetable incorporates modifications corresponding to the reversed directed edges.

Finally, at step 212, the traffic control system 110 uses said new timetable for controlling or managing the traffic of said guided vehicles on said railway network. However, if the traffic control system 110 was not able to break one of the detected cycles, then it automatically generates an alert, preventing therefore to implement the timetable received or acquired at step 201.

To conclude, the present invention proposes a new traffic control system and method for managing traffic of guided vehicles that enable to automatically check whether a modification in a timetable may create inconsistencies in the schedules of guided vehicles as defined by the modified timetable, and to automatically correct said inconsistencies or to alert, for instance an operator, if at least one inconsistency cannot be corrected. This highly improves guided vehicle traffic flow on a railway network.

## Claims

1. Method (200) for managing traffic of guided vehicles (103) over a railway network, said method comprising:
- acquiring (201) a timetable for said guided vehicles (103), said timetable comprising departure and/or arrival times of the guided vehicles (103) at reference positions of said railway network;
- acquiring (202) a map of said railway network;
- using said map of the railway network for automatically splitting (203) the railway network into a set of successive track sections, wherein each track section is delimited by at least two boundary positions (A-M), wherein at least one of said two boundary positions (A-M) is a common boundary position with another track section of said set;
- for each boundary position (A-M), automatically determining (204) a list of the guided vehicles (103) crossing said boundary position (A-M), wherein said list is configured for ordering the guided vehicles according to their temporal succession at said boundary position, wherein a series of temporally successive and consecutive boundary positions (A-M) crossed by one of said guided vehicles is defined as an itinerary for the concerned guided vehicle, said series starting with a first boundary position located upstream one of said reference positions wherein the guided vehicle is authorized to stop or might stop, and ending upstream another one of said reference positions wherein the guided vehicle is authorized to stop or might stop;
- automatically creating (206), from the map, the boundary positions (A-M) and their associated list, a directed graph comprising nodes (401) and directed edges (402), wherein each node (401) represents the itinerary followed by one of said guided vehicles (103), and wherein each directed edge (402) is configured for connecting two of said nodes (401) with one another according to a direction leading from one of said two nodes, called "starting node", to the other one of said two nodes, called "ending node", wherein said directed edge is configured for representing an order relationship between the guided vehicle (103) of the starting node and the guided vehicle (103) of the ending node, wherein if the guided vehicle (103) of the starting node is different from the guided vehicle (103) of the ending node, then the guided vehicle (103) of the starting node precedes the guided vehicle (103) of the ending node at each boundary position (A-M) that they have in common in their respective itinerary as defined by their respective node (401), and wherein if the guided vehicle (103) of the starting node is the same as the guided vehicle (103) of the ending node, then the itinerary defined by the starting node precedes the itinerary defined by the ending node;
- using (207) the directed graph as input to an algorithm configured for automatically detecting whether said directed graph comprises one or several cycles; and
- if no cycle is detected (208) by the algorithm, then managing the traffic of said guided vehicles (103) according to said timetable.

2. Method (200) according to claim 1, wherein, if at least one cycle is detected (209), then, for each detected cycle, automatically determining by said algorithm whether the direction of one or several directed edges involved in said cycle might be reversed for breaking the concerned cycle, and if yes, then reversing (210) at least one of said one or several directed edges involved in the cycle; and
- if each detected cycle has been broken by reversing at least one of its directed edges (211), then automatically generating by said algorithm a new timetable taking into account the reversed directed edge(s), and managing (212) the traffic of said guided vehicles (103) according to said new timetable; otherwise,
- if at least one detected cycle has not been broken, then automatically generating an alert.

3. Method (200) according to claim 2, wherein, if several cycles are detected, then ordering said cycles according to an increasing number of guided vehicles (103) involved in each cycle, and implementing an iteration for breaking cycles that starts from the cycle which comprises the smallest number of guided vehicles (103) and ends with the cycle comprising the largest number of guided vehicles (103), unless a cycle cannot be broken, in which case the iteration stops at said cycle which cannot be broken.

4. Method (200) according to claim 2 or 3, comprising, for determining whether the direction of one or several directed edges (402) involved in a detected cycle might be reversed, classifying, by said algorithm, the directed edges (402) of said detected cycle in two groups, namely a first group comprising directed edges that can be reversed and a second group comprising directed edges that cannot be reversed, wherein a directed edge of said detected cycle belongs to said second group if it is at least one of:
- a directed edge whose direction has been previously reversed in response to a request for changing the temporal order of crossing/passing vehicles in one of said lists associated to one of said boundary positions cannot be reversed;
- a directed edge which is not connected to a node to which a previously reversed directed edge is connected cannot be reversed;
- a directed edge whose reversing would reverse a previous order of successive itineraries for a guided vehicle cannot be reversed;
- a directed edge which is assigned a fixed direction;
otherwise said directed edge (402) belongs to the first group, the method further comprising automatically reversing one or several of the directed edges of the first group for breaking said detected cycle.

5. Method (200) according to claim 4, wherein, for reversing said one or several directed edges of the first group, the algorithm is configured for applying a reversing rule configured for optimizing the traffic.

6. Method (200) to one of the claims 1 to 5, comprising automatically creating (205) a sequencing graph from the map, the timetable, the boundary positions and their associated list, wherein said sequencing graph comprises nodes (301) and edges (302), wherein each node (301) represents one of said boundary positions (A-M) and is assigned said list of guided vehicles (103) passing/crossing said boundary position (AM), wherein each edge (302) is configured for connecting two nodes (301) and represents one of said track sections delimited by the two boundary positions (A-M) represented by the connected two nodes (301) according to said map, each edge (302) being assigned a moving direction configured for indicating the direction of travel followed by the guided vehicle(s) (103) of said list according to the timetable when moving on said track section from one of said boundary positions to the other one, and automatically generating said directed graph from said sequencing graph.

7. Method (200) according to one of the claims 1 to 6, wherein the acquired timetable comprises a change requested by an operator, wherein said change is a modification of an arrival time and/or a modification of a departure time and/or a modification of a crossing time at one or several reference points, and/or a modification of a temporal order of guided vehicles (103) in a list associated to a boundary position.

8. Method (200) according to one of the claims 1 to 7, wherein a splitting algorithm is used for automatically splitting the railway network into said set of successive track sections, wherein the splitting algorithm is configured for applying splitting rules for automatically positioning said boundary positions on the railway network, wherein said splitting rules comprise:
- creating a boundary position between two directly successive switches, wherein each of said switches are converging in direction of said boundary position;
- creating a boundary position at the crossing of two tracks, wherein two tracks arrive at said boundary position and two tracks depart from said boundary position;
- creating a boundary position between a switch and a stop signal and/or creating a boundary position at said stop signal;
- creating a boundary position downstream a converging switch.

9. Traffic control system (110) for managing traffic of guided vehicles (103) over a railway network, said traffic control system comprising a processor (111) and a memory (112), said traffic control system (110) being configured for managing traffic of said guided vehicles (103) over the railway network according to a timetable, said traffic control system (110) being configured for acquiring or receiving said timetable, wherein said timetable comprises departure and/or arrival times of the guided vehicles (103) at reference positions of said railway network, **characterized in that** it is further configured
- for acquiring a map of said railway network, and for using said map of the railway network for automatically dividing/splitting the railway network into a set of successive track sections, wherein each track section is delimited by at least two boundary positions (A-M), wherein at least one of said two boundary positions is a common boundary position with another track section of said set;
- for automatically determining, for each boundary position (A-M), a list of the guided vehicles (103) crossing said boundary position, and, in each list, for temporally ordering the successive guided vehicles (103) crossing said boundary position, wherein a series of temporally successive and consecutive boundary positions (A-M) crossed by one of said guided vehicles is defined as an itinerary for the concerned guided vehicle, said series starting with a first boundary position located upstream one of said reference positions wherein the guided vehicle is authorized to stop or might stop, and ending upstream another one of said reference positions wherein the guided vehicle is authorized to stop or might stop;
- for automatically creating, from the map, the boundary positions (A-M) and their associated list, a directed graph comprising nodes (401) and directed edges (402), wherein each node (401) represents the itinerary followed by one of said guided vehicles (103), and wherein each directed edge (402) is configured for connecting two of said nodes (401) with one another according to a direction leading from one of said two nodes, called "starting node", to the other one of said two nodes, called "ending node", wherein said directed edge (402) is configured for representing an order relationship between the guided vehicle (103) of the starting node and the guided vehicle (103) of the ending node, wherein if the guided vehicle (103) of the starting node is different from the guided vehicle (103) of the ending node, then the guided vehicle (103) of the starting node precedes the guided vehicle (103) of the ending node at each boundary position that they have in common in their respective itinerary as defined by their respective node, and wherein if the guided vehicle (103) of the starting node is the same as the guided vehicle of the ending node, then the itinerary defined by the starting node precedes the itinerary defined by the ending node;
- using the directed graph as input to an algorithm configured for automatically detecting whether said directed graph comprises one or several cycles; and
- if no cycle is detected by the algorithm, then for managing the traffic of said guided vehicles (103) according to said timetable.

10. Traffic control system (110) according to claim 9, wherein, if at least one cycle is detected, then, for each detected cycle, the traffic control system (110) is configured for automatically determining by means of said algorithm whether the direction of one or several directed edges involved in said cycle might be reversed for breaking the concerned cycle, and if yes, then reversing the direction of the concerned directed edge(s); and
- if each detected cycle has been broken by reversing at least one of its directed edges, then automatically generating by said algorithm a new timetable taking into account the reversed directed edges, and managing the traffic of said guided vehicles (103) according to said new timetable; otherwise,
- if at least one detected cycle has not been broken, then automatically generating an alert.

11. Traffic control system (110) according to claim 10, wherein, if several cycles are detected, then the traffic control system is configured for ordering said cycles according to an increasing number of guided vehicles (103) involved in each cycle, and implementing an iteration for breaking cycles that starts from the cycle which comprises the smallest number of guided vehicles (103) and ends with the cycle comprising the largest number of guided vehicles (103), unless a cycle cannot be broken, in which case the iteration stops at said cycle which cannot be broken.

12. Traffic control system (110) according to claim 10 or 11, wherein, for determining whether the direction of one or several directed edges involved in a detected cycle might be reversed, said algorithm is configured for classifying the directed edges of said detected cycle in two groups, namely a first group comprising directed edges that can be reversed and a second group comprising directed edges that cannot be reversed, wherein a directed edge of said detected cycle belongs to said second group if it is at least one of:
- a directed edge whose direction has been previously reversed in response to a request for changing the temporal order of crossing/passing vehicles in one of said lists associated to one of said boundary positions cannot be reversed;
- a directed edge which is not connected to a node to which a previously reversed directed edge is connected cannot be reversed;
- a directed edge whose reversing would reverse a previous order of successive itineraries for a guided vehicle (103) cannot be reversed;
- a directed edge which is assigned a fixed direction;
and otherwise it belongs to the first group, the algorithm being configured for automatically reversing one or several of the directed edges of the first group for breaking said detected cycle.

13. Traffic control system (110) according to one of the claims 9 to 12, configured for automatically creating a sequencing graph from the map, the timetable, the boundary positions (A-M) and their associated list, wherein said sequencing graph comprises nodes (301) and edges (302), wherein each node (301) represents one of said boundary positions and is assigned said list of guided vehicles (103) passing/crossing said boundary position, wherein each edge (302) is configured for connecting two nodes and represents one of said track sections delimited by two boundary positions represented each by a different one of said two nodes, each edge (302) being assigned a moving direction configured for indicating the direction of travel followed by the guided vehicle(s) (103) of said list according to the timetable when moving on said track section from one of said boundary positions to the other one, and wherein the traffic control system (110) is configured for automatically generating said directed graph from said sequencing graph.

14. Traffic control system (110) according to one of the claims 9-13, wherein the acquired timetable comprises a change requested by an operator, said change comprising a modification of an arrival time and/or a modification of a departure time and/or a modification of a crossing time at one or several reference points, and/or a modification of a temporal order of guided vehicles (103) in a list associated to a boundary position.

15. Traffic control system (110) according to one of the claims 9-14, configured for using a splitting algorithm for automatically splitting the railway network into said set of successive track sections, wherein the splitting algorithm is configured for applying splitting rules for automatically positioning said boundary positions on the railway network, wherein said splitting rules comprise:
- creating a boundary position between two directly successive switches, each of said switches being converging in direction of said boundary position;
- creating a boundary position at the crossing of two tracks, wherein two tracks arrive at said boundary position and two tracks depart from said boundary position;
- creating a boundary position between a switch and a stop signal and/or creating a boundary position at said stop signal;
- creating a boundary position downstream a converging switch.

## Patentansprüche

1. Verfahren (200) zum Regeln des Verkehrs von spurgebundenen Fahrzeugen (103) in einem Schienennetz, wobei das Verfahren Folgendes umfasst:
- Abrufen (201) eines Fahrplans für die spurgebundenen Fahrzeuge (103), der Abfahrt- und/oder Ankunftszeiten für die spurgebundenen Fahrzeuge (103) an Referenzpositionen des Schienennetzes umfasst,
- Abrufen (202) einer Karte von dem Schienennetz,
- Benutzen der Karte von dem Schienennetz zum automatischen Unterteilen (203) des Schienennetzes in einen Satz aufeinanderfolgender Gleisabschnitte, wobei jeder Gleisabschnitt von mindestens zwei Grenzpositionen (A-M) begrenzt wird, wobei es sich bei mindestens einer der beiden Grenzpositionen (A-M) um eine Grenzposition handelt, die auch zu einem anderen Gleisabschnitt in dem Satz gehört,
- für jede Grenzposition (A-M) automatisches Ermitteln (204) einer Liste der spurgebundenen Fahrzeuge (103), die die Grenzposition (A-M) durchfahren, wobei die Liste so konfiguriert ist, dass die spurgebundenen Fahrzeuge entsprechend ihrer zeitlichen Reihenfolge an der Grenzposition geordnet werden, wobei eine Reihe von zeitlich aufeinanderfolgenden und hintereinanderliegenden Grenzpositionen (A-M), die von einem der spurgebundenen Fahrzeuge durchfahren werden, als Route für das betreffende spurgebundene Fahrzeug definiert wird, wobei die Reihe mit einer ersten Grenzposition beginnt, die vor einer der Referenzpositionen liegt, an der das spurgebundene Fahrzeug anhalten darf oder kann, und nach einer weiteren der Referenzpositionen endet, wobei das spurgebundene Fahrzeug anhalten darf oder kann,
- automatisches Erstellen (206) der Grenzpositionen (A-M) und der dazugehörigen Liste anhand der Karte, wobei ein gerichteter Graph Knoten (401) und gerichtete Kanten (402) umfasst, wobei jeder Knoten (401) die Route darstellt, der eines der spurgebundenen Fahrzeuge (103) folgt, und jede gerichtete Kante (402) so konfiguriert ist, dass sie zwei der Knoten (401) einer Richtung miteinander verbindet, die von einem der beiden Knoten, der als "Anfangsknoten" bezeichnet wird, zu dem anderen der beiden Knoten führt, der als "Endknoten" bezeichnet wird, wobei die gerichtete Kante so konfiguriert ist, dass sie eine Reihenfolgebeziehung zwischen dem spurgebundenen Fahrzeug (103) vom Anfangsknoten und dem spurgebundenen Fahrzeug (103) vom Endknoten darstellt, wobei, wenn sich das spurgebundene Fahrzeug (103) vom Anfangsknoten von dem spurgebundenen Fahrzeug (103) vom Endknoten unterscheidet, das spurgebundene Fahrzeug (103) vom Anfangsknoten dem spurgebundenen Fahrzeug (103) vom Endknoten an jeder Grenzposition (A-M) vorausfährt, die sie auf ihrer jeweiligen Route laut Definition durch ihren jeweiligen Knoten (401) gemeinsam haben, und wobei, wenn das spurgebundene Fahrzeug (103) vom Anfangsknoten das gleiche ist wie das spurgebundene Fahrzeug (103) vom Endknoten, die von dem Anfangsknoten definierte Route der von dem Endknoten definierten Route vorausgeht,
- Benutzen (207) des gerichteten Graphen als Eingabe für einen Algorithmus, der so konfiguriert ist, dass er automatisch erkennt, ob der gerichtete Graph einen oder mehrere Zyklen umfasst, und,
- wenn von dem Algorithmus kein Zyklus erkannt (208) wird, Regeln des Verkehrs der spurgebundenen Fahrzeuge (103) entsprechend dem Fahrplan.

2. Verfahren (200) nach Anspruch 1, wobei, wenn mindestens ein Zyklus erkannt (209) wird, von dem Algorithmus für jeden erkannten Zyklus automatisch ermittelt wird, ob die Richtung einer oder mehrerer zu dem Zyklus gehörender gerichteter Kanten umgekehrt werden kann, damit der betreffende Zyklus unterbrochen wird, und wenn ja, Umkehren (210) mindestens einer der einen oder mehreren zu dem Zyklus gehörenden gerichteten Kanten, und,
- wenn jeder erkannte Zyklus durch Umkehren mindestens einer seiner gerichteten Kanten (211) unterbrochen wurde, automatisches Generieren eines neuen Fahrplans durch den Algorithmus unter Berücksichtigung der umgekehrten gerichteten Kante/n und Regeln (212) des Verkehrs der spurgebundenen Fahrzeuge (103) entsprechend dem neuen Fahrplan, anderenfalls,
- wenn mindestens ein erkannter Zyklus nicht unterbrochen wurde, automatisches Generieren einer Warnmeldung.

3. Verfahren (200) nach Anspruch 2, wobei, wenn mehrere Zyklen erkannt werden, die Zyklen entsprechend einer zunehmenden Anzahl an jedem Zyklus beteiligter spurgebundener Fahrzeuge (103) geordnet werden und eine Iteration zum Unterbrechen von Zyklen implementiert wird, die bei dem Zyklus beginnt, der die geringste Anzahl spurgebundener Fahrzeuge (103) umfasst, und bei dem Zyklus endet, der die höchste Anzahl spurgebundener Fahrzeuge (103) umfasst, es sei denn, ein Zyklus kann nicht unterbrochen werden, wobei die Iteration in diesem Fall bei dem Zyklus endet, der nicht unterbrochen werden kann.

4. Verfahren (200) nach Anspruch 2 oder 3, das zum Ermitteln, ob die Richtung einer oder mehrerer an einem erkannten Zyklus beteiligter gerichteter Kanten (402) umgekehrt werden kann, das Einordnen der gerichteten Kanten (402) des erkannten Zyklus durch den Algorithmus in zwei Gruppen umfasst, und zwar eine erste Gruppe, die gerichtete Kanten umfasst, die sich umkehren lassen, und eine zweite Gruppe, die gerichtete Kanten umfasst, die sich nicht umkehren lassen, wobei eine gerichtete Kante des erkannten Zyklus zu der zweiten Gruppe gehört, wenn sie:
- eine gerichtete Kante ist, deren Richtung bereits als Reaktion auf eine Anfrage umgekehrt wurde, die zeitliche Reihenfolge durchfahrender/passierender Fahrzeuge in einer der Listen zu ändern, die zu einer der Grenzpositionen gehört, [Lakune?] nicht umgekehrt werden kann,
- eine gerichtete Kante ist, die nicht mit einem Knoten verbunden ist, mit dem eine bereits umgekehrte gerichtete Kante verbunden ist, [Lakune?] nicht umgekehrt werden kann,
- eine gerichtete Kante ist, deren Umkehrung eine vorherige Reihenfolge aufeinanderfolgender Routen für ein spurgebundenes Fahrzeug umkehren würde, [Lakune?] nicht umgekehrt werden kann, und/oder
- eine gerichtete Kante ist, der eine feste Richtung zugeordnet ist,
anderenfalls gehört die gerichtete Kante (402) zur ersten Gruppe, wobei das Verfahren ferner das automatische Umkehren einer oder mehrerer der gerichteten Kanten in der ersten Gruppe zum Unterbrechen des erkannten Zyklus umfasst.

5. Verfahren (200) nach Anspruch 4, wobei der Algorithmus so konfiguriert ist, dass er zum Umkehren der einen oder der mehreren gerichteten Kanten in der ersten Gruppe eine Umkehrregel anwendet, die so konfiguriert ist, dass sie den Verkehr optimiert.

6. Verfahren (200) nach einem der Ansprüche 1 bis 5, das das automatische Erstellen (205) eines Ablaufgraphen anhand der Karte, des Fahrplans, der Grenzpositionen und der dazugehörigen Liste umfasst, wobei der Ablaufgraph Knoten (301) und Kanten (302) umfasst, wobei jeder Knoten (301) eine der Grenzpositionen (A-M) darstellt und ihm die Liste spurgebundener Fahrzeuge (103) zugeordnet wird, die die Grenzposition (A-M) passieren/durchfahren, wobei jede Kante (302) so konfiguriert ist, dass sie zwei Knoten (301) der Karte verbindet, und einen der Gleisabschnitte darstellt, die von den durch die zwei verbundenen Knoten (301) der Karte entsprechend dargestellten Grenzpositionen (A-M) begrenzt werden, wobei jeder Kante (302) eine Bewegungsrichtung zugeordnet wird, die so konfiguriert ist, dass sie die Fahrtrichtung angibt, die das oder die spurgebundenen Fahrzeuge (103) auf der Liste dem Fahrplan entsprechend einhalten, wenn sie sich auf dem Gleisabschnitt von einer der Grenzpositionen zur anderen bewegen, und das automatische Generieren des gerichteten Graphen anhand des Ablaufgraphen umfasst.

7. Verfahren (200) nach einem der Ansprüche 1 bis 6, wobei der abgerufene Fahrplan eine von einem Betreiber angeforderte Änderung umfasst, wobei es sich bei der Änderung um eine Anpassung einer Ankunftszeit und/oder eine Anpassung einer Abfahrtszeit und/oder eine Anpassung einer Durchfahrzeit an einem oder mehreren Referenzpunkten und/oder eine Anpassung einer zeitlichen Reihenfolge spurgebundener Fahrzeuge (103) in einer zu einer Grenzposition gehörigen Liste handelt.

8. Verfahren (200) nach einem der Ansprüche 1 bis 7, wobei ein Unterteilungsalgorithmus zum automatischen Unterteilen des Schienennetzes in den Satz aufeinanderfolgender Gleisabschnitte benutzt wird, wobei der Unterteilungsalgorithmus so konfiguriert ist, dass er Unterteilungsregeln zum automatischen Positionieren der Grenzpositionen im Schienennetz anwendet, wobei die Unterteilungsregeln Folgendes umfassen:
- Erstellen einer Grenzposition zwischen zwei direkt aufeinanderfolgenden Weichen, wobei beide Weichen in Richtung der Grenzposition zusammenlaufen,
- Erstellen einer Grenzposition am Kreuzungspunkt zweier Gleise, wobei zwei Gleise an der Grenzposition ankommen und zwei Gleise von der Grenzposition ausgehen,
- Erstellen einer Grenzposition zwischen einer Weiche und einem Haltesignal und/oder Erstellen einer Grenzposition an dem Haltesignal,
- Erstellen einer Grenzposition nach einer zusammenführenden Weiche.

9. Verkehrsleitsystem (110) zum Regeln des Verkehrs spurgebundener Fahrzeuge (103) in einem Schienennetz, wobei das Verkehrsleitsystem einen Prozessor (111) und einen Speicher (112) umfasst, wobei das Verkehrsleitsystem (110) so konfiguriert ist, dass es den Verkehr der spurgebundenen Fahrzeuge (103) in dem Schienennetz einem Fahrplan entsprechend regelt, wobei das Verkehrsleitsystem (110) so konfiguriert ist, dass es den Fahrplan abrufen oder empfangen kann, wobei der Fahrplan Abfahrt- und/oder Ankunftszeiten für die spurgebundenen Fahrzeuge (103) an Referenzpositionen in dem Schienennetz umfasst, **dadurch gekennzeichnet, dass** es ferner so konfiguriert ist, dass es:
- eine Karte von dem Schienennetz abruft und diese Karte von dem Schienennetz zum automatischen Aufteilen/Unterteilen des Schienennetzes in einen Satz aufeinanderfolgender Gleisabschnitte benutzt, wobei jeder Gleisabschnitt von mindestens zwei Grenzpositionen (A-M) begrenzt ist, wobei es sich bei mindestens einer der beiden Grenzpositionen um eine Grenzposition handelt, die auch zu einem anderen Gleisabschnitt in dem Satz gehört,
- automatisch für jede Grenzposition (A-M) eine Liste von den spurgebundenen Fahrzeugen (103) ermittelt, die die Grenzposition durchfahren, und in jeder Liste die aufeinanderfolgenden spurgebundenen Fahrzeuge (103), die die Grenzposition durchfahren, zeitlich ordnet, wobei eine Reihe von zeitlich aufeinanderfolgenden und hintereinanderliegenden Grenzpositionen (A-M), die von einem der spurgebundenen Fahrzeuge durchfahren werden, als Route für das betreffende spurgebundene Fahrzeug festgelegt ist, wobei die Reihe mit einer ersten Grenzposition beginnt, die vor einer der Referenzpositionen liegt, an der das spurgebundene Fahrzeug anhalten darf oder kann, und nach einer weiteren der Referenzpositionen endet, wobei das spurgebundene Fahrzeug anhalten darf oder kann,
- anhand der Karte automatisch die Grenzpositionen (A-M) und die dazugehörige Liste erstellt, wobei ein gerichteter Graph Knoten (401) und gerichtete Kanten (402) umfasst, wobei jeder Knoten (401) die Route darstellt, der eines der spurgebundenen Fahrzeuge (103) folgt, und jede gerichtete Kante (402) so konfiguriert ist, dass sie zwei der Knoten (401) einer Richtung miteinander verbindet, die von einem der beiden Knoten, der als "Anfangsknoten" bezeichnet wird, zu dem anderen der beiden Knoten führt, der als "Endknoten" bezeichnet wird, wobei die gerichtete Kante (402) so konfiguriert ist, dass sie eine Reihenfolgebeziehung zwischen dem spurgebundenen Fahrzeug (103) vom Anfangsknoten und dem spurgebundenen Fahrzeug (103) vom Endknoten darstellt, wobei, wenn sich das spurgebundene Fahrzeug (103) vom Anfangsknoten von dem spurgebundenen Fahrzeug (103) vom Endknoten unterscheidet, das spurgebundene Fahrzeug (103) vom Anfangsknoten dem spurgebundenen Fahrzeug (103) vom Endknoten an jeder Grenzposition vorausfährt, die sie auf ihrer jeweiligen Route laut Definition durch ihren jeweiligen Knoten gemeinsam haben, und wobei, wenn das spurgebundene Fahrzeug (103) vom Anfangsknoten das gleiche ist wie das spurgebundene Fahrzeug vom Endknoten, die von dem Anfangsknoten definierte Route der von dem Endknoten definierten Route vorausgeht,
- den gerichteten Graphen als Eingabe für einen Algorithmus benutzt, der so konfiguriert ist, dass er automatisch erkennt, ob der gerichtete Graph einen oder mehrere Zyklen umfasst, und,
- wenn von dem Algorithmus kein Zyklus erkannt wird, den Verkehr der spurgebundenen Fahrzeuge (103) dem Fahrplan entsprechend regelt.

10. Verkehrsleitsystem (110) nach Anspruch 9, wobei das Verkehrsleitsystem (110) so konfiguriert ist, dass es, wenn mindestens ein Zyklus erkannt wird, mithilfe des Algorithmus für jeden erkannten Zyklus automatisch ermittelt, ob die Richtung einer oder mehrerer zu dem Zyklus gehörender gerichteter Kanten umgekehrt werden kann, damit der betreffende Zyklus unterbrochen wird, und, wenn ja, die Richtung der betreffenden gerichteten Kante/n umkehrt, und,
- wenn jeder erkannte Zyklus durch Umkehren mindestens einer seiner gerichteten Kanten unterbrochen wurde, durch den Algorithmus unter Berücksichtigung der umgekehrten gerichteten Kanten automatisch ein neuer Fahrplan generiert und der Verkehr der spurgebundenen Fahrzeuge (103) dem neuen Fahrplan entsprechend geregelt wird, anderenfalls,
- wenn mindestens ein erkannter Zyklus nicht unterbrochen wurde, automatisch eine Warnmeldung generiert wird.

11. Verkehrsleitsystem (110) nach Anspruch 10, wobei das Verkehrsleitsystem so konfiguriert ist, dass es, wenn mehrere Zyklen erkannt werden, die Zyklen entsprechend einer zunehmenden Anzahl an jedem Zyklus beteiligter spurgebundener Fahrzeuge (103) ordnet und eine Iteration zum Unterbrechen von Zyklen implementiert, die bei dem Zyklus beginnt, der die geringste Anzahl spurgebundener Fahrzeuge (103) umfasst, und bei dem Zyklus endet, der die höchste Anzahl spurgebundener Fahrzeuge (103) umfasst, es sei denn, ein Zyklus kann nicht unterbrochen werden, wobei die Iteration in diesem Fall bei dem Zyklus endet, der nicht unterbrochen werden kann.

12. Verkehrsleitsystem (110) nach Anspruch 10 oder 11, wobei der Algorithmus so konfiguriert ist, dass er zum Ermitteln, ob die Richtung einer oder mehrerer an einem erkannten Zyklus beteiligter gerichteter Kanten umgekehrt werden kann, die gerichteten Kanten des erkannten Zyklus in zwei Gruppen einordnet, und zwar eine erste Gruppe, die gerichtete Kanten umfasst, die sich umkehren lassen, und eine zweite Gruppe, die gerichtete Kanten umfasst, die sich nicht umkehren lassen, wobei eine gerichtete Kante des erkannten Zyklus zu der zweiten Gruppe gehört, wenn sie:
- eine gerichtete Kante ist, deren Richtung bereits als Reaktion auf eine Anfrage umgekehrt wurde, die zeitliche Reihenfolge durchfahrender/passierender Fahrzeuge in einer der Listen zu ändern, die zu einer der Grenzpositionen gehört, [Lakune?] nicht umgekehrt werden kann,
- eine gerichtete Kante ist, die nicht mit einem Knoten verbunden ist, mit dem eine bereits umgekehrte gerichtete Kante verbunden ist, [Lakune?] nicht umgekehrt werden kann,
- eine gerichtete Kante ist, deren Umkehrung eine vorherige Reihenfolge aufeinanderfolgender Routen für ein spurgebundenes Fahrzeug (103) umkehren würde, [Lakune?] nicht umgekehrt werden kann, und/oder
- eine gerichtete Kante ist, der eine feste Richtung zugeordnet ist,
und sie anderenfalls zur ersten Gruppe gehört, wobei der Algorithmus so konfiguriert ist, dass er eine oder mehrere der gerichteten Kanten in der ersten Gruppe automatisch umkehrt, damit der erkannte Zyklus unterbrochen wird.

13. Verkehrsleitsystem (110) nach einem der Ansprüche 9 bis 12, das so konfiguriert ist, dass es anhand der Karte, des Fahrplans, der Grenzpositionen (A-M) und der dazugehörigen Liste automatisch einen Ablaufgraphen erstellt, wobei der Ablaufgraph Knoten (301) und Kanten (302) umfasst, wobei jeder Knoten (301) eine der Grenzpositionen darstellt und ihm die Liste spurgebundener Fahrzeuge (103) zugeordnet ist, die die Grenzposition passieren/durchfahren, wobei jede Kante (302) so konfiguriert ist, dass sie zwei Knoten verbindet, und einen der Gleisabschnitte darstellt, die von zwei Grenzpositionen begrenzt sind, welche jeweils von einem anderen der zwei Knoten dargestellt werden, wobei jeder Kante (302) eine Bewegungsrichtung zugeordnet ist, die so konfiguriert ist, dass sie die Fahrtrichtung angibt, die das oder die spurgebundenen Fahrzeuge (103) auf der Liste dem Fahrplan entsprechend einhalten, wenn sie sich auf dem Gleisabschnitt von einer der Grenzpositionen zur anderen bewegen, und wobei das Verkehrsleitsystem (110) so konfiguriert ist, dass es anhand des Ablaufgraphen automatisch den gerichteten Graphen generiert.

14. Verkehrsleitsystem (110) nach einem der Ansprüche 9-13, wobei der abgerufene Fahrplan eine von einem Betreiber angeforderte Änderung umfasst, wobei die Änderung eine Anpassung einer Ankunftszeit und/oder eine Anpassung einer Abfahrtszeit und/oder eine Anpassung einer Durchfahrzeit an einem oder mehreren Referenzpunkten und/oder eine Anpassung einer zeitlichen Reihenfolge spurgebundener Fahrzeuge (103) in einer zu einer Grenzposition gehörigen Liste umfasst.

15. Verkehrsleitsystem (110) nach einem der Ansprüche 9-14, das so konfiguriert ist, dass es einen Unterteilungsalgorithmus zum automatischen Unterteilen des Schienennetzes in den Satz aufeinanderfolgender Gleisabschnitte benutzt, wobei der Unterteilungsalgorithmus so konfiguriert ist, dass er Unterteilungsregeln zum automatischen Positionieren der Grenzpositionen im Schienennetz anwendet, wobei die Unterteilungsregeln Folgendes umfassen:
- Erstellen einer Grenzposition zwischen zwei direkt aufeinanderfolgenden Weichen, wobei beide Weichen in Richtung der Grenzposition zusammenlaufen,
- Erstellen einer Grenzposition am Kreuzungspunkt zweier Gleise, wobei zwei Gleise an der Grenzposition ankommen und zwei Gleise von der Grenzposition ausgehen,
- Erstellen einer Grenzposition zwischen einer Weiche und einem Haltesignal und/oder Erstellen einer Grenzposition an dem Haltesignal,
- Erstellen einer Grenzposition nach einer zusammenführenden Weiche.

## Revendications

1. Procédé (200) de gestion du trafic de véhicules guidés (103) sur un réseau ferroviaire, ledit procédé comprenant :
- l'acquisition (201) d'un horaire pour lesdits véhicules guidés (103), ledit horaire comprenant des heures de départ et/ou d'arrivée des véhicules guidés (103) à des positions de référence dudit réseau ferroviaire ;
- l'acquisition (202) d'une carte dudit réseau ferroviaire ;
- l'utilisation de ladite carte du réseau ferroviaire pour découper automatiquement (203) le réseau ferroviaire en un ensemble de sections de voie successives, dans lequel chaque section de voie est délimitée par au moins deux positions limites (A-M), dans lequel au moins l'une desdites deux positions limites (A-M) est une position limite commune avec une autre section de voie dudit ensemble ;
- pour chaque position limite (A-M), la détermination automatique (204) d'une liste des véhicules guidés (103) franchissant ladite position limite (A-M), dans lequel ladite liste est configurée pour ordonner les véhicules guidés selon leur succession temporelle à ladite position limite, dans lequel une série de positions limites temporellement successives et consécutives (A-M) franchies par l'un desdits véhicules guidées est définie en tant qu'itinéraire pour le véhicule guidé en question, ladite série commençant avec une première position limite située en amont de l'une desdites positions de référence à laquelle le véhicule guidé est autorisé à s'arrêter ou pourrait s'arrêter, et finissant en amont d'une autre desdites positions de référence à laquelle le véhicule guidé est autorisé à s'arrêter ou pourrait s'arrêter ;
- la création automatique (206), à partir de la carte, des positions limites (A-M) et de leur liste associée, d'un graphe orienté comprenant des nœuds (401) et des arêtes orientées (402), dans lequel chaque nœud (401) représente l'itinéraire suivi par l'un desdits véhicules guidés (103), et dans lequel chaque arête orientée (402) est configurée pour relier deux desdits nœuds (401) l'un à l'autre selon une direction allant de l'un desdits deux nœuds, appelé « nœud de départ », à l'autre desdits deux nœuds, appelé « nœud de fin », dans lequel ladite arête orientée est configurée pour représenter une relation d'ordre entre le véhicule guidé (103) du nœud de départ et le véhicule guidé (103) du nœud de fin, dans lequel si le véhicule guidé (103) du nœud de départ est différent du véhicule guidé (103) du nœud de fin, alors le véhicule guidé (103) du nœud de départ précède le véhicule guidé (103) du nœud de fin à chaque position limite (A-M) qu'ils ont en commun dans leur itinéraire respectif tel que défini par leur nœud respectif (401), et dans lequel si le véhicule guidé (103) du nœud de départ est le même que le véhicule guidé (103) du nœud de fin, alors l'itinéraire défini par le nœud de départ précède l'itinéraire défini par le nœud de fin ;
- l'utilisation (207) du graphe orienté en tant qu'entrée dans un algorithme configuré pour détecter automatiquement si ledit graphe orienté comprend un ou plusieurs cycle(s) ; et
- si aucun cycle n'est détecté (208) par l'algorithme, alors gérer le trafic desdits véhicules guidés (103) selon ledit horaire.

2. Procédé (200) selon la revendication 1, dans lequel, si au moins un cycle est détecté (209), alors, pour chaque cycle détecté, déterminer automatiquement, au moyen dudit algorithme, si la direction d'une ou plusieurs arête(s) orientée(s) impliquée(s) dans ledit cycle pourrait être inversée pour rompre le cycle en question, et si c'est le cas, alors inverser (210) au moins l'une parmi ladite ou lesdites arête(s) orientée(s) impliquée(s) dans le cycle ; et
- si chaque cycle détecté a été rompu en inversant au moins l'une de ses arêtes orientées (211), alors générer automatiquement, par ledit algorithme, un nouvel horaire tenant compte des arêtes orientées inversées, et gérer (212) le trafic desdits véhicules guidés (103) selon ledit nouvel horaire ; sinon,
- si au moins un cycle détecté n'a pas été rompu, alors générer automatiquement une alerte.

3. Procédé (200) selon la revendication 2, dans lequel, si plusieurs cycles sont détectés, alors ordonner lesdits cycles selon un nombre croissant de véhicules guidés (103) impliqués dans chaque cycle, et mettre en œuvre une itération pour rompre les cycles qui commencent à partir du cycle qui comprend le plus petit nombre de véhicules guidés (103) et finissent avec le cycle comprenant le plus grand nombre de véhicules guidés (103), à moins qu'un cycle ne puisse être rompu, auquel cas l'itération s'arrête audit cycle qui ne peut pas être rompu.

4. Procédé (200) selon la revendication 2 ou 3, comprenant, pour déterminer si la direction d'une ou plusieurs arête(s) orientée(s) (402) impliquée(s) dans un cycle détecté peut être inversée, la classification, par ledit algorithme, des arêtes orientées (402) dudit cycle détecté en deux groupes, à savoir un premier groupe comprenant des arêtes orientées qui peuvent être inversées et un deuxième groupe comprenant des arêtes orientées qui ne peuvent pas être inversées, dans lequel une arête orientée dudit cycle détecté appartient audit deuxième groupe si elle est au moins l'une parmi :
- une arête orientée dont la direction a été précédemment inversée en réponse à une demande de changement de l'ordre temporel de véhicules en franchissement/en passage dans l'une desdites listes associées à l'une desdites positions limites ne peut pas être inversée ;
- une arête orientée qui n'est pas reliée à un nœud auquel une arête orientée précédemment inversée est reliée ne peut pas être inversée ;
- une arête orientée dont l'inversion inverserait un ordre précédent d'itinéraires successifs pour un véhicule guidé ne peut pas être inversée ;
- une arête orientée à laquelle une direction fixe est attribuée ;
sinon, ladite arête orientée (402) appartient au premier groupe, le procédé comprenant en outre l'inversion automatique d'une ou plusieurs des arêtes orientées du premier groupe pour rompre ledit cycle détecté.

5. Procédé (200) selon la revendication 4, dans lequel, pour inverser lesdites une ou plusieurs arête(s) orientée(s) du premier groupe, l'algorithme est configuré pour appliquer une règle d'inversion configurée pour optimiser le trafic.

6. Procédé (200) selon l'une des revendications 1 à 5, comprenant la création automatique (205) d'un diagramme de séquence à partir de la carte, de l'horaire, des positions limites et de leur liste associée, dans lequel ledit diagramme de séquence comprend des nœuds (301) et des arêtes (302), dans lequel chaque nœud (301) représente l'une desdites positions limites (A-M) et auquel ladite liste de véhicules guidés (103) passant/franchissant ladite position limite (A-M) est attribuée, dans lequel chaque arête (302) est configurée pour relier deux nœuds (301) et représente l'une desdites sections de voie délimitée par les deux positions limites (A-M) représentée par les deux nœuds reliés (301) selon ladite carte, une direction de déplacement est attribuée à chaque arête (302) et est configurée pour indiquer la direction de déplacement suivie par le ou les véhicule(s) guidé(s) (103) de ladite liste selon l'horaire lors du déplacement sur ladite section de voie de l'une desdites positions limites à l'autre, et la génération automatique dudit graphe orienté à partir dudit diagramme de séquence.

7. Procédé (200) selon l'une des revendications 1 à 6, dans lequel l'horaire acquis comprend un changement demandé par un opérateur, dans lequel ledit changement est une modification d'une heure d'arrivée et/ou une modification d'une heure de départ et/ou une modification d'une heure de franchissement au niveau d'un ou plusieurs point(s) de référence, et/ou une modification d'un ordre temporel de véhicules guidés (103) dans une liste associée à une position limite.

8. Procédé (200) selon l'une des revendications 1 à 7, dans lequel un algorithme de découpage est utilisé pour découper automatiquement le réseau ferroviaire en ledit ensemble de sections de voie successives, dans lequel l'algorithme de découpage est configuré pour appliquer des règles de découpage pour positionner automatiquement lesdites positions limites sur le réseau ferroviaire, dans lequel lesdites règles de découpage comprennent :
- la création d'une position limite entre deux commutateurs directement successifs, dans laquelle chacun desdits commutateurs converge dans la direction de ladite position limite ;
- la création d'une position limite à l'intersection de deux voies, dans laquelle deux voies arrivent à ladite position limite et deux voies s'écartent de ladite position limite ;
- la création d'une position limite entre un commutateur et un signal d'arrêt et/ou la création d'une position limite au niveau dudit signal d'arrêt ;
- la création d'une position limite en aval d'un commutateur convergent.

9. Système de contrôle de trafic (110) pour la gestion du trafic de véhicules guidés (103) sur un réseau ferroviaire, ledit système de contrôle de trafic comprenant un processeur (111) et une mémoire (112), ledit système de contrôle de trafic (110) étant configuré pour gérer le trafic desdits véhicules guidés (103) sur le réseau ferroviaire selon un horaire, ledit système de contrôle de trafic (110) étant configuré pour acquérir ou recevoir ledit horaire, dans lequel ledit horaire comprend des heures de départ et/ou d'arrivée des véhicules guidés (103) à des positions de référence dudit réseau ferroviaire, **caractérisé en ce qu'**il est en outre configuré
- pour acquérir une carte dudit réseau ferroviaire, et pour utiliser ladite carte du réseau ferroviaire pour diviser/découper automatiquement le réseau ferroviaire en un ensemble de sections de voie successives, dans lequel chaque section de voie est délimitée par au moins deux positions limites (A-M), dans lequel au moins l'une desdites deux positions limites est une position limite commune avec une autre section de voie dudit ensemble ;
- pour déterminer automatiquement, pour chaque position limite (A-M), une liste des véhicules guidés (103) franchissant ladite position limite, et, dans chaque liste, pour ordonner temporellement les véhicules guidés successifs (103) franchissant ladite position limite, dans lequel une série de positions limites temporellement successives et consécutives (A-M) franchies par l'un desdits véhicules guidées est définie en tant qu'itinéraire pour le véhicule guidé en question, ladite série commençant avec une première position limite située en amont de l'une desdites positions de référence à laquelle le véhicule guidé est autorisé à s'arrêter ou pourrait s'arrêter, et finissant en amont d'une autre desdites positions de référence à laquelle le véhicule guidé est autorisé à s'arrêter ou pourrait s'arrêter ;
- pour créer automatiquement, à partir de la carte, les positions limites (A-M) et leur liste associée, un graphe orienté comprenant des nœuds (401) et des arêtes orientées (402), dans lequel chaque nœud (401) représente l'itinéraire suivi par l'un desdits véhicules guidés (103), et dans lequel chaque arête orientée (402) est configurée pour relier deux desdits nœuds (401) l'un à l'autre selon une direction allant de l'un desdits deux nœuds, appelé « nœud de départ », à l'autre desdits deux nœuds, appelé « nœud de fin », dans lequel ladite arête orientée (402) est configurée pour représenter une relation d'ordre entre le véhicule guidé (103) du nœud de départ et le véhicule guidé (103) du nœud de fin, dans lequel si le véhicule guidé (103) du nœud de départ est différent du véhicule guidé (103) du nœud de fin, alors le véhicule guidé (103) du nœud de départ précède le véhicule guidé (103) du nœud de fin à chaque position limite qu'ils ont en commun dans leur itinéraire respectif tel que défini par leur nœud respectif, et dans lequel si le véhicule guidé (103) du nœud de départ est le même que le véhicule guidé du nœud de fin, alors l'itinéraire défini par le nœud de départ précède l'itinéraire défini par le nœud de fin ;
- pour utiliser le graphe orienté en tant qu'entrée dans un algorithme configuré pour détecter automatiquement si ledit graphe orienté comprend un ou plusieurs cycle(s) ; et
- si aucun cycle n'est détecté par l'algorithme, alors pour gérer le trafic desdits véhicules guidés (103) selon ledit horaire.

10. Système de contrôle de trafic (110) selon la revendication 9, dans lequel, si au moins un cycle est détecté, alors, pour chaque cycle détecté, le système de contrôle de trafic (110) est configuré pour déterminer automatiquement, au moyen dudit algorithme, si la direction d'une ou plusieurs arête(s) orientée(s) impliquée(s) dans ledit cycle pourrait être inversée pour rompre le cycle en question, et si c'est le cas, alors inverser la direction de la ou des arête(s) orientée(s) en question ; et
- si chaque cycle détecté a été rompu en inversant au moins l'une de ses arêtes orientées, alors générer automatiquement, par ledit algorithme, un nouvel horaire tenant compte des arêtes orientées inversées, et gérer le trafic desdits véhicules guidés (103) selon ledit nouvel horaire ; sinon,
- si au moins un cycle détecté n'a pas été rompu, alors générer automatiquement une alerte.

11. Système de contrôle de trafic (110) selon la revendication 10, dans lequel, si plusieurs cycles sont détectés, alors le système de contrôle de trafic est configuré pour ordonner lesdits cycles selon un nombre croissant de véhicules guidés (103) impliqués dans chaque cycle, et mettre en œuvre une itération pour rompre les cycles qui commencent à partir du cycle qui comprend le plus petit nombre de véhicules guidés (103) et finissent avec le cycle comprenant le plus grand nombre de véhicules guidés (103), à moins qu'un cycle ne puisse être rompu, auquel cas l'itération s'arrête audit cycle qui ne peut pas être rompu.

12. Système de contrôle de trafic (110) selon la revendication 10 ou 11, dans lequel, pour déterminer si la direction d'une ou plusieurs arête(s) orientée(s) impliquée(s) dans un cycle détecté peut être inversée, ledit algorithme est configuré pour classifier les arêtes orientées dudit cycle détecté en deux groupes, à savoir un premier groupe comprenant des arêtes orientées qui peuvent être inversées et un deuxième groupe comprenant des arêtes orientées qui ne peuvent pas être inversées, dans lequel une arête orientée dudit cycle détecté appartient audit deuxième groupe si elle est au moins l'une parmi :
- une arête orientée dont la direction a été précédemment inversée en réponse à une demande de changement de l'ordre temporel de véhicules en franchissement/en passage dans l'une desdites listes associées à l'une desdites positions limites ne peut pas être inversée ;
- une arête orientée qui n'est pas reliée à un nœud auquel une arête orientée précédemment inversée est reliée ne peut pas être inversée ;
- une arête orientée dont l'inversion inverserait un ordre précédent d'itinéraires successifs pour un véhicule guidé (103) ne peut pas être inversée ;
- une arête orientée à laquelle une direction fixe est attribuée ;
sinon, elle appartient au premier groupe, l'algorithme étant configuré pour inverser automatiquement une ou plusieurs des arêtes orientées du premier groupe pour rompre ledit cycle détecté.

13. Système de contrôle de trafic (110) selon l'une des revendications 9 à 12, configuré pour créer automatiquement un diagramme de séquence à partir de la carte, de l'horaire, des positions limites (A-M) et de leur liste associée, dans lequel ledit diagramme de séquence comprend des nœuds (301) et des arêtes (302), dans lequel chaque nœud (301) représente l'une desdites positions limites et auquel ladite liste de véhicules guidés (103) passant/franchissant ladite position limite est attribuée, dans lequel chaque arête (302) est configurée pour relier deux nœuds et représente l'une desdites sections de voie délimitée par deux positions limites représentées chacune par un nœud différent desdits deux nœuds, une direction de déplacement est attribuée à chaque arête (302) et est configurée pour indiquer la direction de déplacement suivie par le ou les véhicule(s) guidé(s) (103) de ladite liste selon l'horaire lors du déplacement sur ladite section de voie de l'une desdites positions limites à l'autre, et dans lequel le système de contrôle de trafic (110) est configuré pour générer automatiquement ledit graphe orienté à partir dudit diagramme de séquence.

14. Système de contrôle de trafic (110) selon l'une des revendications 9-13, dans lequel l'horaire acquis comprend un changement demandé par un opérateur, ledit changement comprenant une modification d'une heure d'arrivée et/ou une modification d'une heure de départ et/ou une modification d'une heure de franchissement au niveau d'un ou plusieurs point(s) de référence, et/ou une modification d'un ordre temporel de véhicules guidés (103) dans une liste associée à une position limite.

15. Système de contrôle de trafic (110) selon l'une des revendications 9-14, configuré pour utiliser un algorithme de découpage pour découper automatiquement le réseau ferroviaire en ledit ensemble de sections de voie successives, dans lequel l'algorithme de découpage est configuré pour appliquer des règles de découpage pour positionner automatiquement lesdites positions limites sur le réseau ferroviaire, dans lequel lesdites règles de découpage comprennent :
- la création d'une position limite entre deux commutateurs directement successifs, chacun desdits commutateurs convergeant dans la direction de ladite position limite ;
- la création d'une position limite à l'intersection de deux voies, dans laquelle deux voies arrivent à ladite position limite et deux voies s'écartent de ladite position limite ;
- la création d'une position limite entre un commutateur et un signal d'arrêt et/ou la création d'une position limite au niveau dudit signal d'arrêt ;
- la création d'une position limite en aval d'un commutateur convergent.
